# EUROPEAN PATENT SPECIFICATION

(11) **EP 3 894 369 B1**
(45) Date of publication and mention of the grant of the patent: **24.01.2024**
(21) Application number: 19835499.5
(22) Date of filing: 13.12.2019
(51) Int. Cl.: C04B 28/00, B01F 27/80

(54) **PROCESS FOR THE PRODUCTION OF PRODUCTS BASED ON GEO-POLYMERIC BINDERS**
VERFAHREN ZUR HERSTELLUNG VON PRODUKTEN AUF BASIS VON GEOPOLYMERBINDEMITTELN
PROCÉDÉ POUR LA PRODUCTION DE PRODUITS À BASE DE LIANTS GÉOPOLYMÈRES

(30) Priority: 13.12.2018 IT 201800011068
(43) Date of publication of application: 20.10.2021
(73) Proprietor: Geomits S.r.l., 41049 Sassuolo (MO) (IT)
(72) Inventor: REGGIANI, Alex, 41049 Sassuolo (MO) (IT)
(74) Representative: Brunacci, Marco
(86) International application number: PCT/IB2019/060747
(87) International publication number: WO 2020/121264

(56) References cited:
- CN-U- 201 997 537
- JP-A- H09 220 715
- JP-B2- 3 688 434
- US-A1- 2008 028 994
- US-A1- 2014 264 140
- US-A1- 2016 340 252
- AADESH INDUSTRIES: "Aadesh Make Mobile concrete batching plant CCP 20", YouTube, 23 January 2018 (2018-01-23), pages 1-4, XP054980229, Retrieved from the Internet: URL:https://www.youtube.com/watch?v=xjZM7d yZuSQ [retrieved on 2020-02-18]
- Mn/dot: "CONCRETE MANUAL", , 30 September 2003 (2003-09-30), XP055609678, Retrieved from the Internet: URL:https://www.dot.state.mn.us/materials/ manuals/concrete/Chapter4.pdf [retrieved on 2019-07-30]

## Description

### Technical Field

The present invention relates to a process for the production of products based on geo-polymeric binders.

### Background Art

With particular reference to the building sector, the use is well known of products based on hydraulic binders or with aerial hardening, in order to bind and cement raw materials such as powders, sand, stone and other stone materials, or for laying blocks and bricks.

These binders are mixed with water mixed with sand, gravel or crushed stone and additives which produce a plastic mass which, once hardened, is able to develop considerable mechanical strength over time.

The mixture of these products is characterized by the triggering of a hydration reaction which determines the development of the mechanical properties of the end product. In detail, the hydration reaction is a sequence of chemical reactions between the components of the mixture and the water which determines a setting and hardening action.

The products based on hydraulic binders, such as e.g. OPC Portland cement, NHL natural hydraulic lime, CAC aluminous cement and CSA aluminous sulfur cement, use fresh water to trigger the hydration process.

Products based on aerial hardening binders such as hydrated lime, gypsum and anhydrite, on the other hand, only harden through a carbonation process.

Nevertheless, both hydraulic and aerial hardening binders are provided, within them, with hydrated minerals containing water within their crystalline grids characteristic of their type such as OPC (alite, belite, celite), or CSA (Yelemite and belite), or alternatively NHL (belite).

The production processes of binders comprise a calcination phase wherein a basic component chosen, for example, from among hydrated lime, NHL, gypsum, anhydrite, mineral mixtures such as OPC, CASA and CSA, undergo a working temperature comprised between 950°C and 1600°C until a clinker is obtained which is subsequently micronized.

Nevertheless, this process is extremely energy-intensive, since fossil fuels, natural gas and electricity are used in the latter.

Furthermore, the use of fresh water significantly increases energy and production costs.

To this must be added that the above process is highly polluting in terms of carbon dioxide generated together with other greenhouse gases.

US 2014/264140 A1 discloses a process for the production of products based on geo-polymeric binders.

### Description of the Invention

The aim of the present invention is to provide a process for the production of products based on geo-polymeric binders which make it possible to significantly reduce production and energy costs compared to processes and plants of known type.

One object of the present invention is to provide a process for the production of products based on geo-polymeric binders which significantly limit water consumption compared to known processes.

Yet another object of the present invention is to provide a process for the production of products based on geo-polymeric binders which make possible the use of non-potable, dirty or salty fresh water without affecting the quality and efficiency of the end product.

Another object of the present invention is to provide a process for the production of products based on geo-polymeric binders which make it possible to obtain binders with improved mechanical properties compared to binders of known type.

A further object of the present invention is to provide a process for the production of products based on geo-polymeric binders which make it possible to obtain binders with high resistance to thermal shocks, fire, acids, and having increased durability over time, compared to binders of known type.

Another object of the present invention is to provide a process for the production of products based on geo-polymeric binders that allow overcoming the aforementioned drawbacks of the prior art in a simple, rational, easy, effective to use and low cost solution.

The aforementioned objects are achieved by the present process having the characteristics of claim 1.

### Brief Description of the Drawings

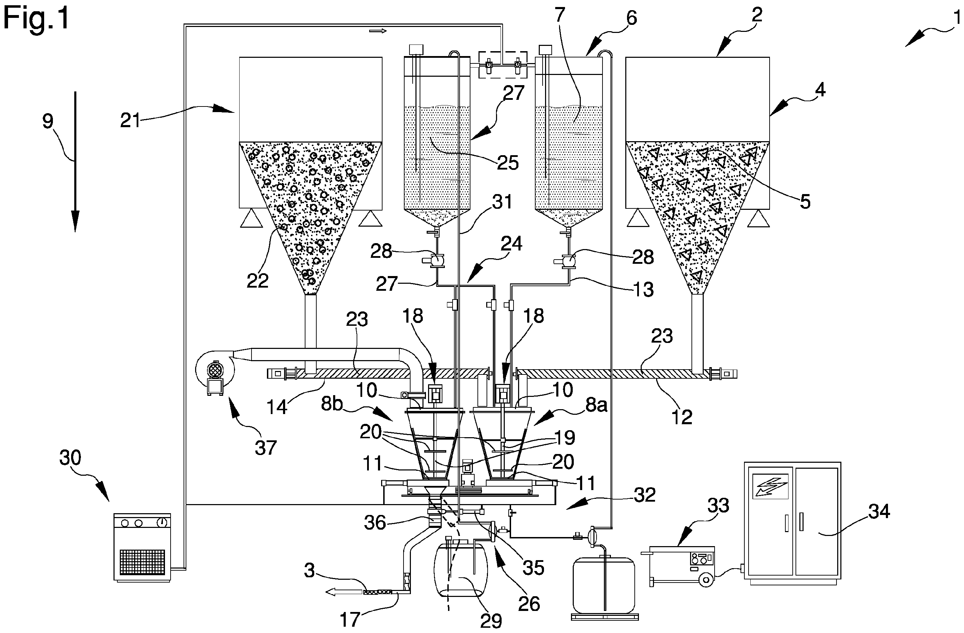

Other characteristics and advantages of the present invention will be more evident from the description of a preferred, but not exclusive, embodiment of a plant for the production of products based on geo-polymeric binders, illustrated as an indication, but not limited to, in the attached tables of drawings in which: Figure 1 is a schematic representation of the plant for carrying out the invention.

### Detailed Description

With particular reference to these figures, reference numeral 1 globally indicates a plant for the production of products based on geo-polymeric binders.

The plant 1 comprises a basic frame for resting on a supporting surface.

This supporting surface may be, e.g., the ground, or alternatively a platform of a trailer, or a towing vehicle or a container.

The plant 1 comprises at least a first containment tank 4 of a basic component 5 comprising aluminosilicates and, also, a second containment tank 6 of a reaction mixture 7.

Preferably, the basic component is selected from the list comprising: fly ash (Class F), blast furnace slag, metacaolin and microsilica.

Advantageously, the aforementioned reaction mixture 7 is an alkaline or acid solution.

Furthermore, the reaction mixture 7 comprises a solution of sodium silicate, or potassium silicate, or mixtures thereof.

Preferably, the reaction mixture 7 comprises phosphoric acid.

Advantageously, the aforementioned phosphoric acid has a molar concentration equal to 8.5 M.

Furthermore, it cannot be ruled out from the scope of the present treatise that the reaction mixture 7 is sea water.

The plant 1 comprises at least one mixing chamber 8a, 8b; in detail, the mixing chamber 8a, 8b is arranged downstream of the first containment tank 4 and of the second containment tank 6, with respect to the direction of forward movement 9 of the basic component 5 and of the reaction mixture 7 inside the plant 1.

More specifically, the mixing chamber 8a, 8b comprises:
- an entry port 10 arranged at the top part of the latter and adapted to allow the introduction inside it of the basic component 5 and of the reaction mixture 7; and
- a discharge port 11 arranged at the lower part of the latter and adapted to allow alternatively the exit of a product based on geo-polymeric binder 3 or washing water 25, described in detail in the remainder of the present treatise.

It is specified that within the scope of the present treatise, the expression "geo-polymeric binder" refers to a substance, or mixture of substances, adapted to set on lithoid elements and bricks, and which, by hardening, connects them in a single resistant complex. In particular, the above expression refers without distinction to mortars and concretes.

Furthermore, the above expression refers to a fluid, which is more or less viscous depending on the type of aluminous silica precursor and alkaline silicate used, which is extremely reactive and will confer properties such as durability, mechanical strength and fire resistance depending on the type of aggregate with which it is mixed to create products based on geo-polymeric binders, without distinction mortars or concretes.

In order to allow the introduction of the basic component 5 and of the reaction mixture 7 into the mixing chamber 8a, 8b, the plant 1 is provided with introduction means 12, 13, 14, 15.

Advantageously, the introduction means 12, 13, 14, 15 comprise a first introduction duct 12 positioned in between the first containment tank 4 and the entry port 10, and a second introduction duct 13 positioned in between the second containment tank 6 and the entry port 10.

At the same time, the plant 1 comprises discharge means 16 located downstream, with respect to the direction of forward movement 9, of the mixing chamber 8a, 8b.

The discharge means 16 comprise a discharge duct adapted to allow the product based on geo-polymeric binder 3 to come out of the mixing chamber 8a, 8b. Preferably, as shown in the illustration, the above discharge means 16 are of the type of a discharge duct; nevertheless, it cannot be ruled out that the latter may consist of conveying means or conveyor belts adapted to move the product based on geo-polymeric binder 3 at the installation site.

With reference to the particular embodiment shown in Figure 1, the discharge means 16 comprise pneumatic means 35 associated with a connection duct 36 that can be moved and placed at the discharge port 11 to make possible the fluidic connection thereof with the discharge duct 16.

Nevertheless, upon the basic component 5 and the reaction mixture 7 being introduced into the mixing chamber 8a, 8b, they need to be mixed together in order to obtain a geo-polymeric binder.

In this regard, the mixing chamber 8a, 8b comprises mixing means 18 of the basic component 5 with the reaction mixture 7 to obtain the geo-polymeric binder.

The mixing means 18 are of a known type by those skilled in the art. Specifically, the mixing means 18 may comprise a shaft element 19 provided with mixing blades 20 positioned along the relevant direction of longitudinal extension of the latter, or alternatively they may comprise an auger element. According to the invention, the mixing means 18 are activated before the entry of the basic component 5 inside the mixing chamber 8a, 8b.

This is a crucial aspect for obtaining the geo-polymeric binder; the fact that the mixing means 8a, 8b are activated before the introduction of the basic component 5 inside the mixing chamber 8a, 8b determines the continuous movement of the latter which, as soon as it contacts the reaction mixture 7 reacts instantly forming the geo-polymeric binder.

The physical-mechanical and aesthetic characteristics of the geo-polymeric binder vary according to the type and quantity of mineral filler 22 contained in it.

In this regard, the plant 1 comprises a third containment tank 21 of a mineral filler 22 introduced into the mixing chamber 8a, 8b through the introduction means 12, 13, 14, 15.

In the same way as the first containment tank 4 and the second containment tank 6, the introduction means 12, 13, 14, 15 comprise a third introduction duct 14 positioned between the entry port 10 and the third containment tank 21.

As shown in the figures, the first introduction duct 12 and the third introduction duct 14 comprise transfer means 23 of the basic component 5 and of the mineral filler 22 respectively.

With reference to the particular embodiment shown in the figures, the transfer means 23 are of the type of an auger element.

It cannot, however, be ruled out from the scope of the present discussion that the transfer means 23 are of a different type, e.g. of the type of conveyor belts. The plant 1 also comprises washing means 24 of the mixing chamber 8.

The washing means 24 comprise a fourth containment tank 27 of washing water 25 and a recovery system 26 of the latter.

Also in this case, the introduction means 12, 13, 14, 15 comprise a fourth introduction duct 15 positioned between the fourth containment tank 27 and the mixing chamber 8a, 8b.

It is as well to underline that the second introduction duct 13 and the fourth introduction duct 15, both tasked with the transfer of liquid substances and, therefore, in particular, the reaction mixture 7 and the washing water 25 respectively, are provided with flow-rate measuring devices 28.

At the same time, the recovery system 26 comprises a settling tank 29 of the washing water 25 and a recovery duct 31 of the latter inside the fourth containment tank 27.

As will be explained in detail in the remainder of the present treatise, the washing water 25 comes out of the mixing chamber 8a, 8b through the discharge port 11 and is collected inside the settling tank 29.

The washing water 25 coming out of the mixing chamber 8a, 8b comprises residues of the product based on geo-polymeric binder 3 which, by gravity, are deposited on the bottom of the settling tank 29 allowing the formation of two phases, of which a lower solid phase consisting of residues of the product based on geo-polymeric binder 3 and an upper liquid phase consisting of the recovered washing water 25.

The latter is then reintroduced into the fourth containment tank 27 through the recovery duct 31.

Furthermore, it is specified that the plant 1 comprises a fifth containment tank of additives, not shown in detail in the figures, selected from the list comprising: anti-foaming agents, fibers, waterproofing agents, fluidifying agents, water or mixtures thereof.

The aforementioned fillers are introduced into one of either the first mixing chamber 8a, or the second mixing chamber 8b in a loading and mixing configuration, following the introduction of the mineral fillers 22.

The addition of these additives is aimed at allowing the texture of the product based on geo-polymeric binders 3 to vary during its production.

In order to ensure continuous monitoring of the mixing, the fifth containment tank is provided with an inspection compartment which is adapted to monitor one of either the first or the second mixing chambers 8a, 8b.

It should be noticed that during the monitoring of mixing, the possible addition of water following the addition of additives cannot be ruled out from the scope of the present treatise.

In order to increase the production efficiency of plant 1, the latter comprises a plurality of mixing chambers 8a, 8b.

With reference to the particular embodiment solution shown in the figures, the plant 1 comprises a first mixing chamber 8a and a second mixing chamber 8b. It cannot however be ruled out that, in the ambit of the present treatise, the plant 1 may comprise three, four, five, etc. mixing chambers 8a, 8b.

Specifically, the mixing chambers 8a, 8b are associated with movement means 32 adapted to allow the mutual alternation thereof between a charging and mixing configuration in which one of either the first mixing chamber 8a or the second mixing chamber 8b is in fluidic communication with the introduction means 12, 13, 14, 15, and a discharging and washing configuration in which the other one of either the first mixing chamber 8a or the second mixing chamber 8b is in fluidic communication with the washing means 24.

In detail, the movement means 32 comprises a movable supporting element adapted to allow the simultaneous positioning of at least one of the two mixing chambers 8a, 8b at the washing means 24, the other mixing chamber 8a, 8b at the introduction means 12, 13, 14, 15.

The movement means 32 are of the type of a plate-shaped element which can be rotated or shifted and which allows the mixing chambers 8a, 8b to alternate in their respective configurations.

Advantageously, the plate-shaped element 32 rotates by about 180° allowing the alternation between the loading and mixing configuration and the discharge and washing configuration.

This means that, with reference to the preferred embodiment shown in the figures, when e.g. the first mixing chamber 8a is in the loading and mixing configuration, i.e. it has the mixing means 18 activated, the second mixing chamber 8b is in the discharge and washing configuration, and vice versa. More in detail, when one of either the first mixing chamber 8a or the second mixing chamber 8b is in the loading and mixing configuration, it has the entry port 10 in fluidic connection with the introduction means 12, 13, 14, 15.

This means that the entry port 10 is positioned at one end of the first introduction duct 12, of the second introduction duct 13 and of the third introduction duct 14.

At the same time, the second mixing chamber 8b is in the discharge and washing configuration, i.e. it has the entry port 10 and the discharge port 11 in fluidic communication with the washing means 24.

This means that the entry port 10 is positioned at one end of the fourth introduction duct 15 and the discharge port 11 is positioned at the discharge duct 16.

More in detail, once the product based on geo-polymeric binder 3 is discharged into the discharge duct 16, the pneumatic means 35 place, by tilting it, the connection duct 36 in fluidic communication with the settling tank 29.

The plant 1 also comprises a control and monitoring unit 33 adapted to allow controlling the quantities of basic component 5, reaction mixture 7, mineral filler 22 and, if present, any additives inserted inside the mixing chamber 8a, 8b. Furthermore, the control and monitoring unit 33 is adapted to activate and/or deactivate the mixing means 18, as well as to monitor its relative speed of rotation.

Again, the control and monitoring unit 33 is adapted to activate the movement means 32 to allow the switch from the loading and mixing configuration to the discharge and washing configuration alternately of the first mixing chamber 8a, 8b and of the second mixing chamber 8a, 8b, and vice versa.

Furthermore, the control and monitoring unit 33 comprises a user interface device, not shown in detail in the illustration, of the type of a touch screen. Before the detailed explanation of the plant 1, it should be pointed out that the latter is provided with an inlet circuit 30 for introducing air under pressure inside the second containment tank 6 and the fourth containment tank 27. Finally, the plant 1 comprises a power supply system 34 of the electrical type. The operation of the plant 1 according to the process in accordance with the present invention is as follows.

The process comprises a phase of supply of the basic component 5 comprising silicates or aluminosilicates, and of the reaction mixture 7 to mix to these. Then, the process comprises a phase of first mixing of the basic component 5 and of the reaction mixture 7 inside the mixing chamber 8a, 8b comprising the mixing means 18.

More specifically, the basic component 5 and the reaction mixture 7 are introduced inside one of either the first mixing chamber 8a or the second mixing chamber 8b.

By way of example, the basic component 5 and the reaction mixture 7 are introduced inside the first mixing chamber 8a.

This means that the first mixing chamber 8a is in the loading and mixing configuration, while the second mixing chamber 8b is in the discharge and washing configuration.

According to the invention, the phase of first mixing comprises the following steps of:
- activation of the mixing means 18;
- first introduction of the basic component 5 inside the mixing chamber 8a, 8b;
- second introduction of the reaction mixture 7 inside the mixing chamber 8a, 8b to obtain a geo-polymeric binder.

In the first mixing phase, the mixing means 18 have a first increasing rotation speed.

Preferably, the mixing means 18 have a rotation speed higher than 500 revs/min.

The process comprises a second mixing phase subsequent to the first mixing and, in turn, comprising at least one step of third introduction of the mineral filler 22 in the mixing chamber 8a, 8b.

Preferably, in the second mixing phase, the mixing means 18 have a second rotation speed which is lower than the first speed.

It cannot be ruled out that the second mixing phase may comprise a step of fourth introduction of additives comprising: anti-foaming agents, fibers, waterproofing agents, fluidifying agents, water or mixtures thereof. Advantageously, the first mixing phase and the second mixing phase have an overall operating time ranging from 30 seconds to 200 seconds, preferably ranging from 60 to 90 seconds.

At the end of the second mixing phase, the process comprises a discharge phase of the product based on geo-polymeric binder 3 through the discharge port 11. In practice, once the second mixing phase has been completed, the movement means 32 activated by the control and monitoring unit 33 rotate by 180° placing the first mixing chamber 8a with the entry port 10 arranged in fluidic communication with the washing means 24, and the second mixing chamber 8b in fluidic communication with the introduction means 12, 13, 14, 15.

The pneumatic means 35 therefore place the connection duct 36 at the discharge port 11 and at the discharge duct 16.

Once the discharge of the product based on geo-polymeric binder 3 has been completed, the pneumatic means 35, again activated by the control and monitoring unit 33, place the connection duct 36, by tilting it, at the settling tank 29.

The process therefore continues comprising a washing phase of the mixing chamber 8a, 8b, in this case of the first mixing chamber 8a.

The washing phase comprises, in turn, one step of fifth introduction of the washing water 25.

The washing water 25 is introduced inside the first mixing chamber 8a through the entry port 10, by means of the fourth introduction duct 15.

At this point, the mixing means 18 are again activated by the control and monitoring unit 33 in order to facilitate the recovery of residues of the product based on geo-polymeric binder 3 remaining attached to the walls of the first mixing chamber itself.

The washing water 25 flows out of the first mixing chamber 8a through the discharge port 11 which, by passing through the connection duct 36, enables it to be collected in the settling tank 29.

When the lower and upper phases are identified inside the settling tank 29, the control and monitoring unit 33 activates the recovery of the washing water 25 which, through the recovery duct 31, is reintroduced into the fourth containment tank 27.

The lower layer consisting of residues of the product based on geo-polymeric binder 3 is removed from the bottom portion of the settling tank 29.

Finally, the process comprises a drying phase of the mixing chamber 8a, 8b, in the present case of the first mixing chamber 8a.

The drying phase is carried out through introduction means of air under pressure, indicated in the figure with reference numeral 37.

At the same time, the second mixing chamber 8b is in the loading and mixing configuration and, at the end of the second mixing phase, it is positioned by the movement means 32 in the discharge and washing configuration.

In other words, the first mixing chamber 8a and the second mixing chamber 8b are rotated by the movement means 32 by 180° at the end of the second mixing phase and of the drying phase respectively, in order to allow the alternation between the loading and mixing configuration and the unloading and washing configuration.

At this point, the plant 1 is ready to start the production process again in accordance with the present invention.

It has in practice been ascertained that the described invention achieves the intended objects.

The fact is underlined that the special solution of providing mixing means activated before the entry of the basic component and of the reaction mixture makes it possible to obtain a product based on geo-polymeric binder with significantly improved physical-mechanical properties compared to binders of known type.

In particular, the above product based on geo-polymeric binder has properties of resistance to direct exposure to the sun and UV rays, to fire, to acid or sulfate attack, to freeze/thaw cycles or to storm cycles with temperatures ranging between 20°C and 60°C, considerably higher than both cement and organic materials such as those based on polyester resins, polyurethane resins, epoxy resins and phenolic resins. This is due to the formulation stability obtained with the production process and the relative plant in accordance with the present invention.

In fact, the automated mixing monitored by the control and monitoring unit together with the automated control of the quantities of inserted product makes it possible to ensure the repetitiveness of the formulation and, consequently, the stability of the properties of the product based on geo-polymeric binder.

A further advantage of this production process and the related plant is that it has the size and volumetric dimensions required for transport by truck or in containers, making it possible to produce the product based on geo-polymeric binder directly "in situ".

Furthermore, the production plant will make it possible to considerably cut production costs and times, also reducing energy costs and the generation of waste compared to plants of known type. Among the energy costs, water saving is particularly important, the products based on geo-polymeric binder make it possible to use salt or waste water for their production; this makes it possible to also produce these products in worksites set up in hostile environments such as, e.g., desert areas, subarctic areas or on oil drilling platforms.

## Claims

1. Process for the production of products based on geo-polymeric binders, comprising the following phases of:
- supply of at least one basic component (5) comprising aluminosilicates and at least one reaction mixture (7);
- first mixing of said basic component (5) and of said reaction mixture (7) inside at least one mixing chamber (8a, 8b) comprising mixing means (18);
**characterized by** the fact that said phase of first mixing comprises at least the following steps of:
- activation of said mixing means (18);
- first introduction of said basic component (5) inside said mixing chamber (8a, 8b);
- second introduction of said reaction mixture (7) inside said mixing chamber (8a, 8b) to obtain a geo-polymeric binder;
wherein said process comprises a phase of second mixing subsequent to said phase of first mixing and, in turn, comprising at least a step of third introduction of a mineral filler (22) in said mixing chamber (8a, 8b) to obtain a product based on a geo-polymeric binder (3).

2. Process according to claim 1, **characterized by** the fact that said reaction mixture (7) is an alkaline or acid solution.

3. Process according to one or more of the preceding claims, **characterized by** the fact that said reaction mixture (7) comprises a solution of sodium silicate, or potassium silicate, or mixtures thereof.

4. Process according to one or more of claims 1-3, **characterized by** the fact that said reaction mixture (7) comprises phosphoric acid.

5. Process according to one or more of the preceding claims, **characterized by** the fact that said second phase of mixing comprises at least a step of fourth introduction of additives comprising: anti-foaming agents, fibers, waterproofing agents, fluidifying agents, water or mixtures thereof.

6. Process according to one or more of the preceding claims, **characterized by** the fact that it comprises a washing phase of said mixing chamber (8a, 8b), said washing phase comprising, in its turn, at least one step of fifth introduction of washing water (25).

7. Process according to one or more of the preceding claims, **characterized by** the fact that in said first phase of mixing said mixing means (18) have a first increasing rotation speed.

8. Process according to one or more of the preceding claims, **characterized by** the fact that in said second phase of mixing said mixing means (18) have a second rotation speed which is lower than said first speed.

## Patentansprüche

1. Verfahren zur Herstellung von Produkten auf der Basis von geopolymeren Bindemitteln, das die folgenden Phasen umfasst:
- Zufuhr von mindestens einer Basiskomponente (5), die Alumosilikate enthält, und mindestens eines Reaktionsgemischs (7);
- erstes Mischen der Basiskomponente (5) und des Reaktionsgemischs (7) in mindestens einer Mischkammer (8a, 8b), die Mischmittel (18) umfasst,
**dadurch gekennzeichnet, dass** die Phase des ersten Mischens mindestens die folgenden Schritte umfasst:
- Aktivierung der Mischmittel (18);
- erstes Einbringen der Basiskomponente (5) in die Mischkammer (8a, 8b);
- zweites Einbringen des Reaktionsgemischs (7) in die Mischkammer (8a, 8b), um ein geopolymeres Bindemittel zu erhalten;
wobei das Verfahren eine Phase des zweiten Mischens im Anschluss an die Phase des ersten Mischens umfasst und diese ihrerseits mindestens einen Schritt eines dritten Einbringens eines mineralischen Füllstoffs (22) in die Mischkammer (8a, 8b) umfasst, um ein Produkt auf der Basis eines geopolymeren Bindemittels (3) zu erhalten.

2. Verfahren nach Anspruch 1, **dadurch gekennzeichnet, dass** das Reaktionsgemisch (7) eine alkalische oder saure Lösung ist.

3. Verfahren nach einem oder mehreren der vorhergehenden Ansprüche, **dadurch gekennzeichnet, dass** das Reaktionsgemisch (7) eine Lösung von Natriumsilikat oder Kaliumsilikat oder Mischungen davon umfasst.

4. Verfahren nach einem oder mehreren der Ansprüche 1 bis 3, **dadurch gekennzeichnet, dass** das Reaktionsgemisch (7) Phosphorsäure enthält.

5. Verfahren nach einem oder mehreren der vorhergehenden Ansprüche, **dadurch gekennzeichnet, dass** die zweite Phase des Mischens mindestens einen Schritt eines vierten Einbringens von Additiven umfasst, die Antischaummittel, Fasern, Imprägniermittel, Verflüssigungsmittel, Wasser oder Mischungen davon umfassen.

6. Verfahren nach einem oder mehreren der vorhergehenden Ansprüche, **dadurch gekennzeichnet, dass** es eine Waschphase der Mischkammer (8a, 8b) umfasst, wobei die Waschphase ihrerseits mindestens einen Schritt eines fünften Einbringens von Waschwasser (25) umfasst.

7. Verfahren nach einem oder mehreren der vorhergehenden Ansprüche, **dadurch gekennzeichnet, dass** die Mischmittel (18) in der ersten Mischphase eine erste zunehmende Drehgeschwindigkeit aufweisen.

8. Verfahren nach einem oder mehreren der vorhergehenden Ansprüche, **dadurch gekennzeichnet, dass** die Mischmittel (18) in der zweiten Mischphase eine zweite Drehgeschwindigkeit aufweisen, die niedriger als die erste Geschwindigkeit ist.

## Revendications

1. - Procédé de production de produits à base de liants géopolymères, comprenant les phases suivantes de :
- fourniture d'au moins un composant de base (5) comprenant des aluminosilicates et au moins un mélange réactionnel (7) ;
- premier mélange dudit composant de base (5) et dudit mélange réactionnel (7) à l'intérieur d'au moins une chambre de mélange (8a, 8b) comprenant des moyens de mélange (18) ;
**caractérisé par le fait que** ladite phase de premier mélange comprend au moins les étapes suivantes de :
- activation desdits moyens de mélange (18);
- première introduction dudit composant de base (5) à l'intérieur de ladite chambre de mélange (8a, 8b) ;
- deuxième introduction dudit mélange réactionnel (7) à l'intérieur de ladite chambre de mélange (8a, 8b) pour obtenir un liant géopolymère ;
dans lequel ledit procédé comprend une phase de second mélange à la suite de ladite phase de premier mélange et comprenant, à son tour, au moins une étape de troisième introduction d'une charge minérale (22) dans ladite chambre de mélange (8a, 8b) pour obtenir un produit à base d'un liant géopolymère (3).

2. - Procédé selon la revendication 1, **caractérisé par le fait que** ledit mélange réactionnel (7) est une solution alcaline ou acide.

3. - Procédé selon une ou plusieurs des revendications précédentes, **caractérisé par le fait que** ledit mélange réactionnel (7) comprend une solution de silicate de sodium, ou de silicate de potassium, ou de mélanges de ceux-ci.

4. - Procédé selon une ou plusieurs des revendications 1 à 3, **caractérisé par le fait que** ledit mélange réactionnel (7) comprend de l'acide phosphorique.

5. - Procédé selon une ou plusieurs des revendications précédentes, **caractérisé par le fait que** ladite seconde phase de mélange comprend au moins une étape de quatrième introduction d'additifs comprenant : des agents anti-mousse, des fibres, des agents imperméabilisants, des agents fluidifiants, de l'eau ou des mélanges de ceux-ci.

6. - Procédé selon une ou plusieurs des revendications précédentes, **caractérisé par le fait qu'**il comprend une phase de lavage de ladite chambre de mélange (8a, 8b), ladite phase de lavage comprenant, à son tour, au moins une étape de cinquième introduction d'eau de lavage (25) .

7. - Procédé selon une ou plusieurs des revendications précédentes, **caractérisé par le fait que**, dans ladite première phase de mélange, lesdits moyens de mélange (18) ont une première vitesse de rotation croissante.

8. - Procédé selon une ou plusieurs des revendications précédentes, **caractérisé par le fait que**, dans ladite seconde phase de mélange, lesdits moyens de mélange (18) ont une seconde vitesse de rotation qui est inférieure à ladite première vitesse.
